(19) **Europäisches Patentamt**

**European Patent Office**

**Office européen des brevets**

(11) **EP 1 133 135 B1**

(12) **EUROPEAN PATENT SPECIFICATION**

(45) Date of publication and mention
of the grant of the patent:
**09.07.2003 Bulletin 2003/28**

(51) Int Cl.⁷: **H04M 1/725**, H04M 1/60

(21) Application number: **00301589.8**

(22) Date of filing: **29.02.2000**

(54) **Communication apparatus and method**

Kommunikationsgerät und Verfahren

Appareil de communication et méthode

(84) Designated Contracting States:
**GB**

(43) Date of publication of application:
**12.09.2001 Bulletin 2001/37**

(73) Proprietor: **Cyber Pacific International Holdings
Limited
Kowloon (HK)**

(72) Inventor: **Law, Ping On Wilson
Kowloon (HK)**

(74) Representative:
**McLeish, Nicholas Alistair Maxwell et al
Boult Wade Tennant
Verulam Gardens
70 Gray's Inn Road
London WC1X 8BT (GB)**

(56) References cited:
EP-A- 0 840 465         GB-A- 2 333 420
US-A- 4 882 745         US-A- 5 375 174
US-A- 5 590 417         US-A- 5 896 375
US-A- 5 983 100

## Description

The present invention relates to communication apparatus for providing a wire-less two-way audio link between a person and apparatus having an audio output and an audio input. A preferred embodiment provides a miniature wireless digital duplex speech communication system, for example between a mobile phone and a user to enable hands-free operation, the system having two separate transceiver units. More particularly, embodiments of the present invention relate to a digital wireless microphone and earphone system, operating at frequency about 2400MHz and at relatively low DC power.

Nowadays, the cellular phone is getting so popular that a large percentage of the total population is using this technology in everyday life. However there are some potential hazards that threaten the health, or more severely, the life of the user. The health hazard happens due to the fact that the microwave energy emitted from the antenna will have some adverse effects on the brain of the user when the phone is placed close to the ear. The life hazard happens when the user is making or receiving calls while he is driving. There is proof that the risk of having a car accident directly correlates with use of cellular phones. To reduce these threats, users have begun to use external microphone and headphone connected to the cellular phone. This reduces or even eliminates the health threat and to some extent alleviates the burden of a driver using the cellular phone because he no longer needs to carry the phone close to the ear so that he has both hands available. However, a drawback of this approach is that the length of wire running from the cellular phone to the microphone and headphone imposes certain inconveniences on the user, like entangled wire and the fact that placement of the phone is restricted by the wire.

US-A-5983100 discloses an integrated local communication system comprising a plurality of locally-positioned communication devices, at least one of which locally-positioned communication devices is operably coupled to a local interface module. A local communication link is selectably effectuated between any two locally-positioned communication devices via at least one local interface module by transforming a non-local communication signal into a local communication signal and transceiving the local communication signal using a single preselected communication protocol that is common to all local communication links. An exemplary embodiment may include at least one mobile station associated with a Public Land Mobile Network, at least one radio-enhanced phone interfacing device associated with a Public Switching Telephone Network, at least one electronic data terminal selectably disposed in a distributed computing environment, and at least one wireless head-set for hands-free operability. Devices within the integrated local communication system also being capable of communicating with other devices in the integrated local communication system.

GB-A-2333420 discloses a remote headset for a mobile phone. The remote headset is connected via a short range radio link through transceiver to the mobile phone. When the radio transceiver is connected to the mobile phone switches and are automatically switched from the internal loudspeaker and microphone to the external lines which are connected to the short range transceiver. The short range transceiver can be attached to, or part of, the battery pack. The short range transceiver detects when the mobile phone is transmitting signal bursts to the base station and times the signal bursts to the headset to avoid concurrent signal bursts. The transceivers may be of the TDMA type.

US-A-5896375 discloses a short-range wireless radio communications system that can carry data, voice, or data and voice traffic simultaneously. The band is divided into a plurality of channels or hops, and a burst composed of either voice information, data information, or a combination of data and voice information is transmitted during one of the hops. The system operates preferably in a simplex mode, but full duplex operation can also be employed. The system can also be operated in a cellular. TDMA system. A multiple time slot method is employed whereby one time slot can carry data and another time slot can carry voice information.

It is an object of the present invention to address problems associated with the prior art.

According to a first aspect of the present invention there is provided communication apparatus as defined by Claim 1.

Thus, if, in the case of mobile phone applications, neither party is speaking, transmission of "empty" audio and voice data packets can be terminated to save power.

Advantageously, the controllers may be arranged to exchange synchronization hand shake signals (SHS) at predetermined time intervals while both of the intensities remain below their respective thresholds, the SHS signals being modulated signals transmitted on a predetermined command channel (frequency channel) in alternate time intervals in time division duplex fashion, the base unit and head-set being arranged to switch to respective low-power-consumption modes between the SHS signals.

Preferably, in response to the intensity of the received audio signal exceeding the predetermined threshold, the base unit controller is arranged to search for an empty communication channel by controlling the receiver and decoder and monitoring the received signal intensities at different frequencies, and after finding an empty communication channel, is arranged to send a SHS signal containing information regarding the empty channel to the head-set, the base unit and head-set being arranged to then commence transmitting the audio encoded and voice encoded carrier signals on the empty channel in the time division duplex fashion.

The head-set is self supporting on the person's head.

The apparatus with the audio output and input may, for example, be a mobile phone and the communication apparatus thus provides the advantage of hands-free operation during a call, without the inconvenience of a wire link.

Preferably the transmitted voice-encoded carrier signal has a maximum intensity no higher than 10 micro watts and so poses no health risk to the user. Preferably, the total radiated power from each of the head-set and base unit does not exceed 10 micro watts. Thus, a short range audio link is provided with no associated health risks.

Advantageously, each encoder is arranged to digitally encode the respective carrier signal with the received audio signal or voice signal. This provides the advantage that eavesdropping is made extremely difficult.

Preferably, each encoder comprises a modulator for modulating the respective carrier signal with the received audio signal or voice signal, and a buffer, the buffer being connected in series between the modulator and transmitter and being controllable to adjust the magnitude of the transmitted encoded carrier signals.

Thus, the controllers may control the. magnitude of the transmitted signals from the head-set and base unit to keep the total radiated power down to safe levels, for example a few micro watts, or can reduce power to the minimum level necessary to achieve reliable communication between the head-set and base unit, thereby extending battery life.

The buffers provide a further advantage in that they isolate the modulators from strong radiation received by the respective antennae.

Preferably, each modulator comprises a respective digital encoder, FIFO memory buffer, data packet encoder and frequency synthesizer, each being connected to the respective controller, and a resistive divider,

the digital encoder being arranged to receive and digitally encode the received audio signal or voice signal and output a first encoded data stream at a first data rate,

the FIFO memory buffer being arranged to receive and store said first encoded data stream, and to output the stored data as a second data stream at a second data rate in response to a control signal from the controller,

the data packet encoder being arranged to receive the second data stream and to add a synchronization field before and an error check field after the second data stream a data packet, the data packet encoder being further arranged to output the data packet at a third data rate to the resistive divider, the resistive divider being arranged to output a corresponding data packet having reduced amplitude,

the frequency synthesizer having a modulation input arranged to receive the corresponding data packet, and being further arranged to generate said first or second carrier signal, modulate the respective carrier signal with the corresponding data packet, and output the modulated carrier signal to the buffer.

Preferably the second data rate is at least twice the first data rate, and preferably the third data rate is approximately three times higher than the first data rate. Thus, short compressed data packets containing audio and voice data can be produced and transmitted between the head-set and base unit in time division duplex fashion on a common frequency channel.

Preferably the first data rate is approximately 32KHz.

Advantageously, each decoder comprises a buffer arranged to condition the respective received encoded carrier signal, and a demodulator, the demodulator being arranged to receive the conditioned signal from the buffer, decode the conditioned signal and output the decoded signal to the speaker or said output.

Preferably, each said demodulator comprises a frequency synthesizer, arranged to generate a signal at a frequency determined by a control signal from the respective controller, a mixer, a digital demodulator, a data packet decoder, a FIFO memory buffer and a digital decoder, each being connected to the respective controller,

the mixer being arranged to receive the conditioned signal from the buffer and the signal from the frequency synthesizer and generate a signal at an intermediate frequency (I.F.), and output the I.F. signal to the digital demodulator, the digital demodulator being arranged to demodulate the I.F. signal to recover the modulating data packet and output the recovered data packet to the data packet decoder,

the data packet decoder being arranged to check the synchronisation field and error check field for transmission errors, extract data from the middle field and send the extracted data to the FIFO memory buffer,

the FIFO memory buffer being arranged to store the extracted data and output the data as a data stream to the digital audio decoder in response to a command signal from the controller,

the digital audio decoder being arranged to decode the data stream and output the decoded signal to the microphone or said output.

Advantageously, the encoder of the base unit comprises a first frequency synthesizer and the decode of the base unit comprises the same first frequency synthesizer, the frequency generated by the synthesizer being controlled by the controller according to whether the base unit is in transmitting or receiving mode, the encoder and decoder of the head-set similarly sharing a second frequency synthesizer controlled by the head-set controller. Thus, by sharing the same frequency synthesizer between the transmission and reception circuits, the head-set and base unit can be simplified and reduced in size.

Further preferred features are set out in Claim 7.

Preferably, in embodiments of the present invention, the first and second carrier signals are RF signals. Preferably the common frequency channel lies in the range 2200 to 2600MHz.

Advantageously, the first and second carrier frequencies may both be approximately 2400MHz.

Preferably, the base unit and head-set each comprise a respective transceiver which includes the transmitter and receiver, the transceiver being switchable between a transmitting mode and a receiving mode in response to control signals from the respective controller.

Advantageously, each transceiver may comprise a respective antenna connected via a respective band pass filter to a respective switch, the switch being operable to selectively connect the filter and antenna to the signal encoding means or decoding means in response to control signals from the controller.

Preferably, the frequencies of the first and second carrier signals are controlled (set or determined) by the respective controllers, for example by appropriate control of the frequency divider in the (RF) frequency synthesizer phase lock loop (PLL).

Advantageously, the base unit and head-set may each comprise a respective battery, and the respective transmitter and receiver may be arranged to operate from a supply voltage substantially equal to the output voltage of the respective battery. Thus the need for step up converters may be avoided, so improving the efficiency, and extending battery life.

Preferably, the apparatus having an audio output and input is a mobile telephone, and the base unit is adapted to interface with the phone. For example, the base unit my be adapted to connect directly into the audio input/output socket/terminal of the phone, or alternatively may comprise a microphone and speaker arranged to align with those on the phone (i.e. the base unit may be linked to the phone by means of electrical connection, or by transmitted sound waves).

According to a second aspect of the present invention there is provided a method of providing a two-way audio link between a person and apparatus having an audio output and an audio input, the method being defined in Claim 14.

Preferably, the first and second carrier signals are radio frequency (RF) signals.

Preferably, the common frequency channel or first frequency range lies in the range 2200 to 2600MHz.

Preferably, the first and second carrier signals each have a frequency of approximately 2400MHz.

Preferably, said transmitted signals each have a maximum intensity of less than 10 micro watts.

Thus, embodiments of the present invention can provide a wire-less two-way audio link between a user and a mobile phone, in the form of an adaptor comprising a first transceiver, interfacing with the phone, and a second transceiver (e.g. a head-set), interfacing with the user, the first and second transceivers exchanging audio signals in the form of compressed data packets transmitted in time division duplex fashion on a common carrier frequency channel. Thus a wireless transceiver system is used to replace the wire of previous arrangements. In such a system, a first transceiver is attached to the cellular phone (hereafter referred to as base) and a second transceiver is worn on the head (hereafter referred to as head-set).

Embodiments of the present invention take into account the importance of size restriction, eavesdropping prevention, RF radiation immunity, low RF radiation and low power consumption for such a system to be acceptable as a quality product. These design constraints are analyzed as follows:

Size restriction - a prima facie requirement of a transceiver is lightness and smallness. In a preferred embodiment, the base should be attached to the side or back of the phone and the head-set hangs freely down by the cheek. The size of the base will conform to the shape of the phone and frequency range;

encoding the first carrier signal with the audio signal;

transmitting the audio-encoded first carrier signal from the base unit to a head-set worn on the person's head;

decoding the received audio-encoded signal in the head-set;

outputting the decoded signal to the person via a speaker;

generating a voice signal indicative of the person's vocal output using a microphone;

generating a second carrier signal in the head-set in said first frequency range;

encoding the second RF carrier signal with the voice signal;

transmitting the voice-encoded second carrier signal from the head set to the base unit;

decoding the received voice-encoded signal in the base unit, and

outputting the decoded signal to said audio input, the method further comprising the steps of transmitting a synchronisation signal from at least one of the base unit and head-set to the other; and synchronizing said transmitting steps such that the audio and voice encoded signals are transmitted in alternate time intervals to provide time division duplex communication between the base unit and head-set in said first frequency range.

Preferably, the first and second carrier signals are radio frequency (RF) signals.

Preferably, the common frequency channel or first frequency range lies in the range 2200 to 2600MHz.

Preferably, the first and second carrier signals each have a frequency of approximately 2400MHz.

Preferably, said transmitted signals each have a maximum intensity of less than 10 micro watts.

According to a fourth aspect of the present invention there is provided a method of providing a two-way audio link between a person and apparatus having an audio input and an audio output, the method comprising the steps of:

receiving at a base unit an audio signal from the audio output;

converting the audio signal to a digital audio data stream;

forming the audio data stream into discrete audio data packets;

transmitting the audio data packets to a head-set using a first carrier signal;

receiving the transmitted audio data packets at the head-set;

reconstructing the audio signal at the head-set from the received audio data packets;

outputting the reconstructed audio signal to the person via a speaker;

detecting the person's vocal output using a head-set microphone;

converting the microphone signal to a digital voice data stream;

forming the voice data stream into discrete voice data packets;

transmitting the voice data packets to the base unit using a second carrier signal, the frequencies of said first and second carrier signals lying in a common frequency channel;

receiving the transmitted voice data packets at the base unit;

reconstructing the microphone signal at the base unit from the received voice data packets; and

outputting the reconstructed microphone signal to the apparatus audio input,

the method further comprising the steps of:

transmitting a synchronisation signal from at least one of the base unit and head-set to the other;

receiving the synchronisation signal at the base unit or head-set respectively; and

synchronising said transmitting steps such that the audio data packets and voice data packets are transmitted alternately to provide time division duplex communication between the base unit and head-set on said frequency channel.

Thus, embodiments of the present invention can provide a wire-less two-way audio link between a user and a mobile phone, in the form of an adaptor comprising a first transceiver, interfacing with the phone, and a second transceiver (e.g. a head-set), interfacing with the user, the first and second transceivers exchanging audio signals in the form of compressed data packets transmitted in time division duplex fashion on a common carrier frequency channel. Thus a wireless transceiver system is used to replace the wire of previous arrangements. In such a system, a first transceiver is attached to the cellular phone (hereafter referred to as base) and a second transceiver is worn on the head (hereafter referred to as head-set).

Embodiments of the present invention take into account the importance of size restriction, eavesdropping prevention, RF radiation immunity, low RF radiation and low power consumption for such a system to be acceptable as a quality product. These design constraints are analyzed as follows:

Size restriction - a prima facie requirement of a transceiver is lightness and smallness. In a preferred embodiment, the base should be attached to the side or back of the phone and the head-set hangs freely down by the cheek. The size of the base will conform to the shape of the phone and should only occupy a total volume of no larger than 3 cubic inches and the size of the headphone is no larger than 5 by 1 by 0.5 inches.

Eavesdropping prevention - this is very important to a user to maintain absolute secrecy of private conversation.

RF radiation immunity - since the base is attached to the cellular phone, it must be able to withstand high RF radiation level in excess of 1 watt at frequencies in the 800 - 1000Mhz and 1800 to 1950Mhz ranges (these are the operating frequency ranges of the presently available cellular phones). It is a critical requirement as this high radiation will produce crackling sound in the receiving circuit if not dealt with properly.

Low RF radiation - since a short communication range will suffice, therefore a very low RF is required. The radiation level is at the micro-watt range and produces no harm to the user.

Lower power consumption - the working time of the system must outlast the cellular phone before recharge, therefore it is not a trivial matter in circuit design.

Considering all these constraints, preferred embodiments of the present invention utilise digital wireless communication techniques at a frequency of about 2400MHz, implemented with low power circuit and smart power save feature. The advantages are explained as follows. Firstly, the use of relatively high operation frequency is reducing size of dominant components, like antenna and RF filter. Additionally, at higher frequency, the relatively high efficiency of antenna with small printed circuit board grounding simplifies RF design by eliminating the need for transmit power amplification stage and receive low noise amplification stage. Secondly, digital wireless communication technique ensures that eavesdropping is almost impossible. Thirdly, high power radiation immunity to nearby cellular phone can be easily guaranteed with a RF filter with very small form factor.

Accordingly, preferred embodiments of the present invention take advantages of digital wireless communication techniques and RF design at relatively high frequency about 2400Mhz to provide a novel and non-obvious system for the convenience and good health of the general public cellular phone users.

A preferred embodiment of the present invention provides a digital wireless duplex speech communication system which utilizes the wide bandwidth now available for consumer electronics, namely, frequency about 2400MHz.

This embodiment is directed generally to a pair of transceivers which communicate wirelessly in digital duplex mode at frequency about 2400MHz. In operation a base transceiver is connected to a cellular phone while another, configured as a head-set equipped with microphone and speaker, is worn on the head. The communication range between transceivers is restricted to a short range because the transmission power is in the micro-watt magnitude. This minute radiation energy produces no harm at all to the user and therefore is safe to use in everyday life.

In the presently preferred embodiment, a digital Time Division Duplex (TDD) technique is used in duplex communication. In TDD, the duplex communication is accomplished by having each unit alternating between transmission and reception at fixed and synchronized time intervals.

The transmission and reception circuits of the base and head-set (which may alternatively be termed a headphone) are identical. These circuits are designed for DC operation wherein the voltage is substantially equal to the DC voltage directly applied to the base and head-piece so that the use of step up converters can be avoided, thereby increasing the duration of time for DC power operation without unduly draining DC battery cells which run the units. However, this does not restrict the use of DC step up converters in alternative embodiments because there is a possibility where, for the purpose of reducing weight or whatever reasons, one might want to have a very low DC voltage source e.g. approaching 0.8 volt. This situation happens when a single 1.2-volt rechargeable button cell is used. The 0.8 volt limit allows an operation margin which is necessary because the voltage of such cell will gradually fade in normal usage. It is well-known to the ordinary-state-of-the-art that such step-up converters, working on a supply voltage as low as 0.8 volt, are readily available as integrated circuit of very small form factor. Therefore, in certain embodiments the invention, a step-up converter can be used to reduce size and weight by sacrificing battery efficiency.

For a better understanding of the invention, its operating advantages, and specific objects attained by its use, reference should be had to the accompanying drawings and descriptive matter in which there are illustrated and described preferred embodiments of the invention. It is to be understood, however, that the drawings are designed solely for illustration purposes and not as a definition of the limits of the invention.

Embodiments of the present invention will now be described with reference to the accompanying drawings, of which:

Fig.1 is a diagram illustrating communication between the base unit and head-set of a first preferred embodiment;
Fig. 2 is a block diagram of the base transceiver (base unit) of the first embodiment;
Fig. 3 is a block diagram of the head-set transceiver of the first embodiment;
Fig. 4 is a block diagram of the modulator of the first embodiment;
Fig. 5 is a block diagram of the demodulator of the first embodiment; and
Fig. 6 is a block diagram of the RF synthesizer of the first embodiment.

Embodiments of the present invention provide a novel and non-obvious transceiver system that communicates wirelessly in digital duplex mode. The base receiver attaches to an audio input/output device such as, by way of non-limiting example, cellular phone, intercom, multimedia computer, telephone etc. The headphone plugs into the ear socket and hangs close to the cheek.

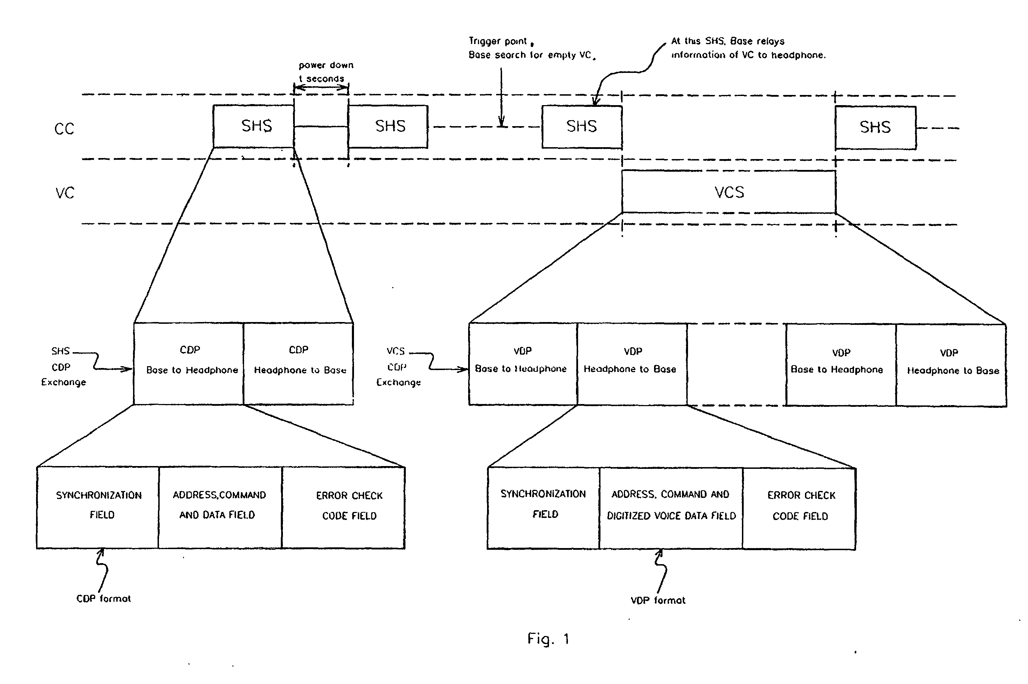

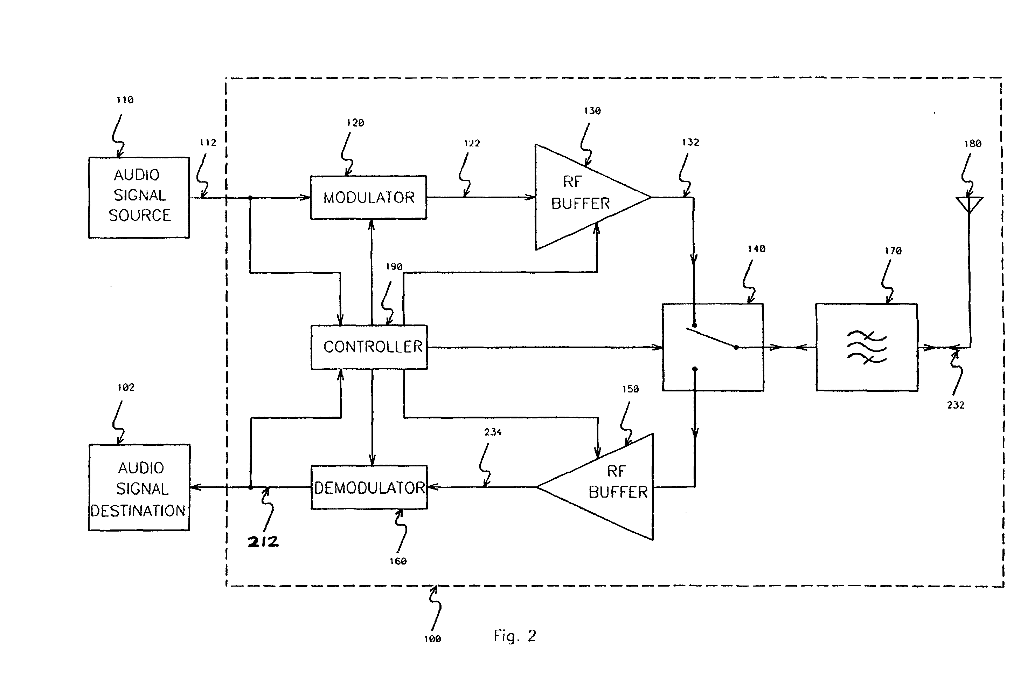

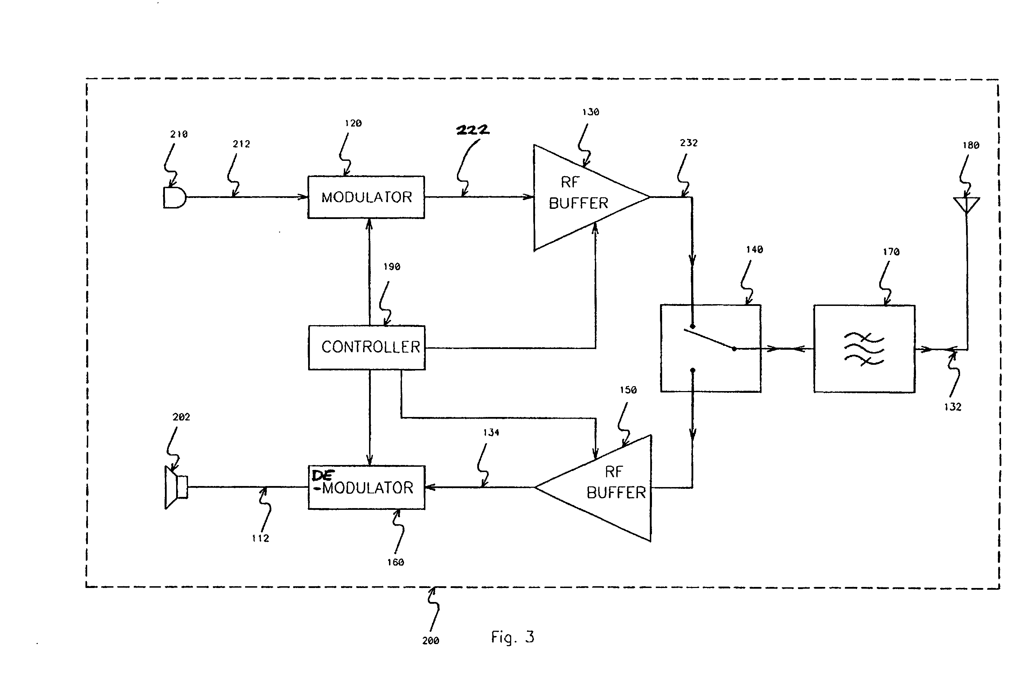

Refer to the drawings in detail, Fig. 1 shows the logical layer of operation of the presently preferred embodiment. Figs. 2 and 3 shown the physical top layer functional blocks of base and headphone transceivers designated 100 and 200 respectively. The general operation of the logical layer will be discussed first, followed by a detailed description of the physical layers of the presently preferred embodiment including the specific physical functional blocks and operation thereof.

Refer to Fig. 1. At power up, the base and the head-piece (head-set) will do a synchronization hand shaking (SHS) by exchanging command data packets (CDP) through a Command Channel (CC). This CC is chosen to be a channel most unlikely to be interfered by others, and is arbitrarily chosen by the manufacturer. This SHS will be repeated periodically at time interval, say, t seconds. Whenever SHS fails, both units will display a warning which may be, by way of unlimited example, flashing of LED or beeping. The main purpose of this synchronization process is to allow both units to power down between successive hand-shakings and ensure proper operation of the system. When the system is ready, i.e. after successful power-up hand-shaking stage, the base is ready to detect the level of the source audio signal 112. Whenever this level reaches beyond a certain threshold, the base will go into the operation state. Firstly, it will search for an empty Voice Channel (VC) by temporarily monitoring signal intensity of a VC. A VC is justified to be empty whenever the signal intensity is below certain threshold. At the next SHS, the base will send a command plus the VC information to the head-piece to enter the voice communication state (VCS). At this stage, both units are in the VCS and duplex voice communication is carried on at the VC by exchanging Voice Data Packets (VDP). The base will detect termination of this state by judging on the levels of the source audio signal and the destination audio signal. If they both fall below a certain limit for a duration of, say, d seconds, then the base will stop transmission at the VC and switch over to the CC for synchronization hand-shaking. When the headphone detects termination of voice communication, it will switch also to the CC for hand-shaking. And so the whole operation sequence restarts again. Thus, a smart power save feature is provided.

Refer again to Fig. 1 which illustrates the preferred formats of CDP and VDP. Each packet is composed of three fields, a synchronization field, an address, data and command field, and an error check field. The synchronization field is to synchronize the data clocks of both units. The address, data and command field relays information for both sides such as address identity, VC number, or voice data. The error check field is a redundant code to check bit errors. This may simply be a check sum or parity bit. This type of data packet format is very commonplace in wireless data communication and no specific requirement is imposed in this application so that it should be understood any format can be used without departing from the scope of the claimed invention.

Now refer to Fig. 2 and 3 for details on the physical layer of the system. In transmit mode, the base 100 receives an analog input signal 112 from the audio signal source 110 and feeds to the RF modulator 120. The RF modulator 120 synthesizes a digitally modulated carrier signal 122 at frequency about 2400Mhz. The modulated carrier signal 122 then goes through a RF buffer stage 130 which filters and amplifies signal 122. This RF buffer stage 130 is designed with two purposes. Firstly it is used to isolate the RF modulator 120 from strong radiation received by the antenna 180. This strong radiation arises from the proximity of the base to the audio signal source 110 which may be a high power radiator like a cellular phone with radiation magnitude in the unit watt range. Secondly it is used to adjust the magnitude of the carrier 122 so that the radiated power through the antenna 180 is in the micro-watt magnitude. Now the output signal 132 from RF buffer 130 is fed to the RF switch 140 which is controlled by the controller 190. Then signal 132 passes through a band-pass filter 170 and radiates through the antenna 180 which is designed to radiate in a directional fashion. The band-pass filter 170 is preferred to be of the SAW (Surface Acoustic Wave) type for its small form factor and high out-of-band rejection. The antenna 180 may be a wire loop antenna or a micro-strip antenna with narrow bandwidth and high directivity, considering the small size of the chassis, these types of antennae are most suitable. As is well-known, there are commercially available micro-strip antennae built with material of very high dielectric coefficient such that the size can be shrunk comparably to a finger nail at frequency about 2400Mhz. If cost factor is more important, then a wire loop antenna is also acceptable with higher loss.

In receive mode, the base 100 receives a modulated carrier signal 232, from antenna 180, through the band-pass filter 170 and the RF switch 140, transmitted from the headphone. The signal 232 then passes through a RF buffer 150. This buffer is designed to have a narrow bandwidth and low gain. The reason being that the communication range is limited to a few metres and that radiation immunity is the most important factor of all. Now the conditioned signal 234 from the buffer 150 enters the RF demodulator 160 which recovers the audio signal 212 from the microphone 210 of the headphone. The audio signal 212 is fed to the audio signal destination 102.

The headset 200 operates essentially the same way as the base 100. The headphone receives an analog input signal 212 from the microphone 210 and feeds to the RF modulator 120. The RF modulator synthesizes a digitally modulated carrier signal 222 at frequency the same as the signal 122. The signal 222 then goes through a RF buffer stage 130 which filters and amplifies the signal 222. Now the output signal 232 from RF buffer 130 is fed to the RF switch 140 which is controlled by the controller 190. Then signal 232 passes through a band-pass filter 170 and radiates through the antenna 180 which is designed to radiate in a directional fashion. It should be noted that signal 132 transmitted from the base has exactly the same characteristics as the signal 232 transmitted from the headphone. The two signals are short bursts which happens alternately in time sequence.

Similar to the base, the headphone 200 receives the modulated carrier signal 132, from antenna 180, transmitted from the headphone. It goes through the same processing as in the base and finally the source audio signal 112 from the base is recovered and fed to speaker 202.

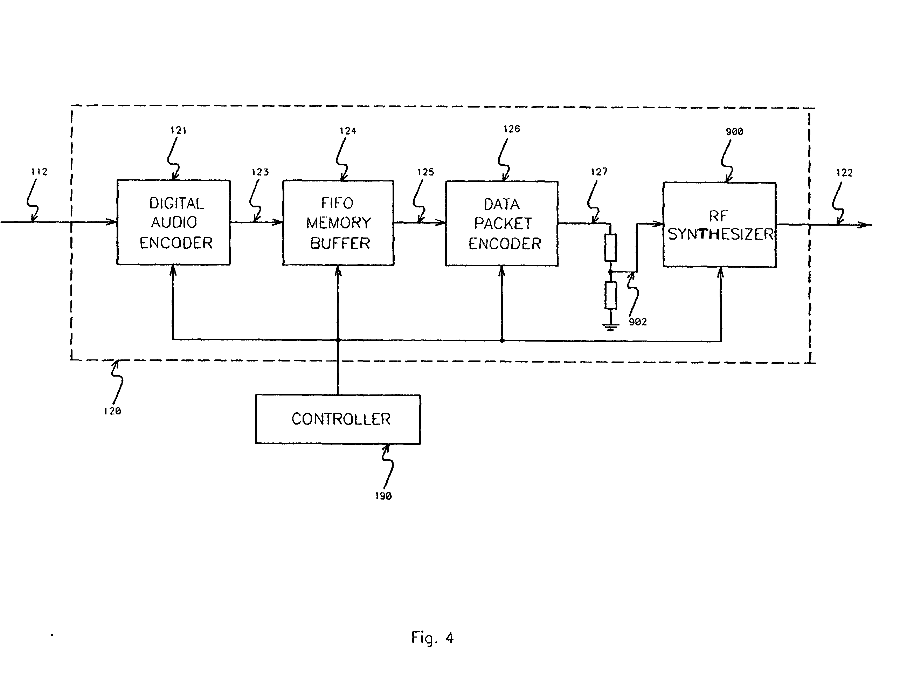

Now refer to Fig. 4 which is a functional block diagram of the modulator 120 configured for use in the base. In VCS, the source audio signal 112 enters the audio signal encoder 121 which digitally encodes the signal 112 forming an encoded data stream 123 preferably at 32 KHz. The encoder may be, by way of unlimited example, CVSD, PCM, ADPCM or the like. The data rate of 32 KHz is a reasonable choice judging on overall quality and cost. The data stream 123 enters a first-in-first-out memory buffer (FIFO) 124 and is stored until the controller 190 commands it to stream out data at a rate higher than twice the rate of the data stream 123 forming data stream 125. This data stream 125 further enters a data packet encoder 126 which adds the synchronization field before the data stream and the error check field after the data stream to form the complete data packet 127 which is the VDP. Thus, in a preferred implementation the audio data stream is in fact expanded to form the audio data packets. A segment of the second data stream from the FIFO is packed together with the synchronization field and error check field to form an audio data packet. Therefore, the data packets have three times the size of the audio data stream. The data packet 127 is preferably at a rate of approximately three times the rate of data stream 123. It should be understood that the preferred choice of data packet rate is approximately the lowest possible, and that higher rate is in no sense limited in this invention. It is preferred for the reason of lessening the speed requirement of the FIFO memory buffer, data packet encoder and the controller, thereby reducing power and memory size. In SHS, the controller 190 will provide data for the data packet forming the CDP which is at the same data rate as the VDP but preferably with shorter middle field. The reason being that the shorter the CDP, the less chance of transmission collision. Now the data packet 127 which is in physical form a burst of pulse signal preferably at 96KHz (i.e. 3x32KHz), goes through a resistive divider (potential divider) so that its amplitude is adjusted suitably to become the modulation input 902 of the RF synthesizer 900. The frequency of the RF synthesizer 900 is programmed by the controller 190 to produce a digitally modulated carrier signal 122.

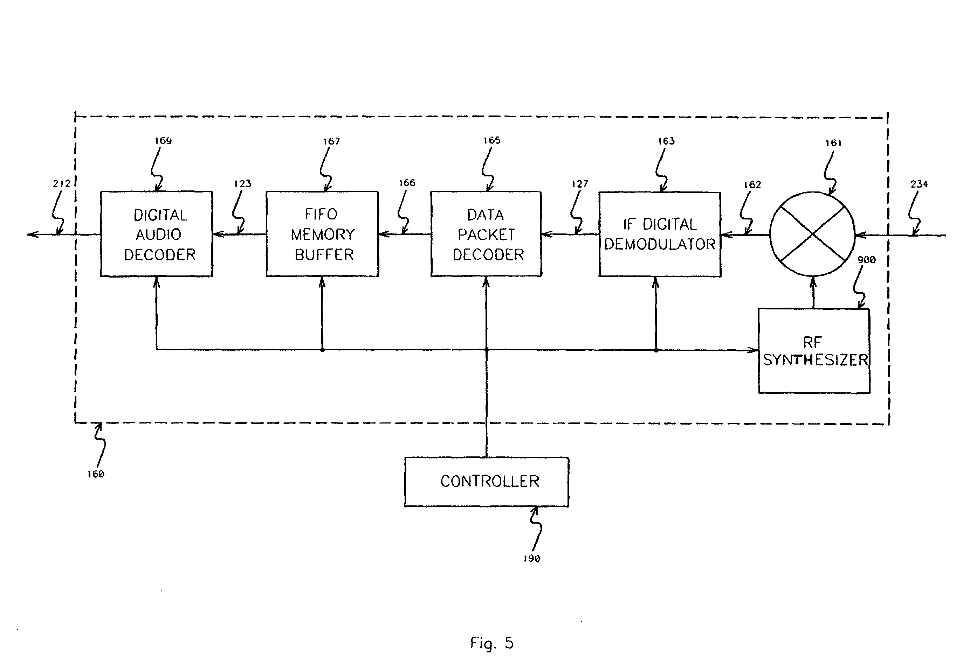

Refer to Fig. 5 which is a functional block diagram of the demodulator 160. The conditioned signal 234 which is a short burst of transmission from the headphone enters firstly a mixer 161 which down coverts the signal 234 to a lower intermediate frequency 162. The down conversion is a traditional multiplication type with the local oscillator provided by the RF synthesizer 900. Note that synthesizer 900 creates oscillations at appropriate frequencies alternately at transmit and receive. The frequency of 900 is simply programmed by the controller 190. Now the IF 162 enters an IF digital demodulator which recovers the data packet 127. This IF digital demodulator is implement with an IC as are readily commercially available, suitable examples are the type, 13155, 13156 or the likes. The data packet 127 is sent to a data packet decoder which checks for synchronization, recovers or checks for transmission errors, and decode the middle field for identity, command and data. The controller will interpret the command, identity and any other data not relevant with voice encoding and performs all necessary action such as matching identity, battery condition of the headphone or any other information seem appropriate. The voice encoding data 166 will enter a FIFO memory buffer 167 and will be streamed out as the original encoded data stream 123. Data stream 123 will enter a digital audio decoder and the original audio signal 212, which is the audio signal input at the microphone of the headphone, is recovered.

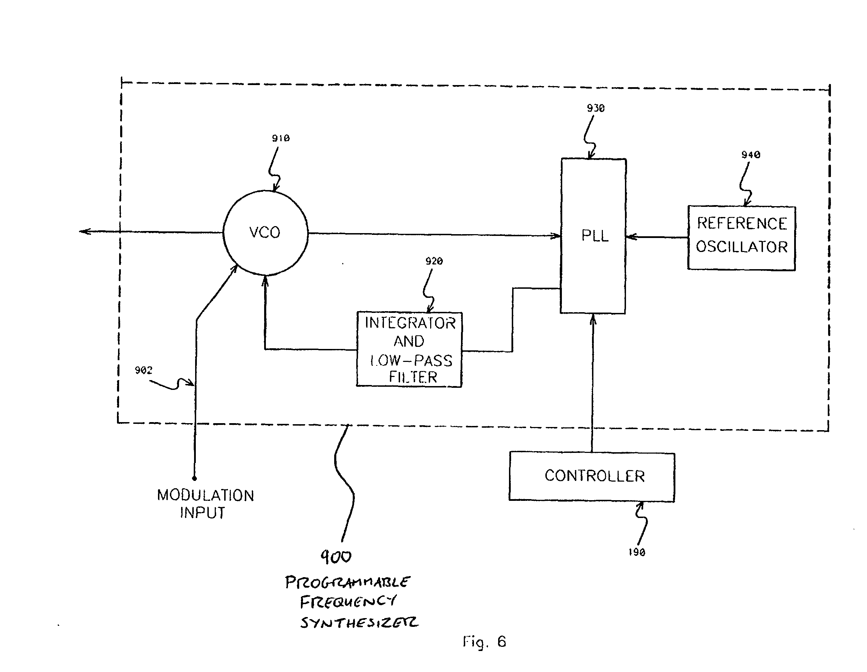

Refer to Fig.6 for an explanation of the operation of the RF synthesizer 900 (i.e. programmable frequency synthesizer). It essentially contains a phase lock loop (PLL) programmed by the controller 190. The reference oscillator 940 provides a reference frequency which is used to compare the phase of the divide-down frequency of the voltage controlled oscillator (VCO) 910. The phase error voltage is integrated and low-pass filtered by 920 and the resultant DC offset voltage is used to control the VCO. The VCO can be modulated by a modulation input 902 which is a digital base-band signal in this preferred embodiment. The PLL integrated circuit contains a phase detector and a controllable frequency divider.

In preferred embodiments the power radiated from the headset is approximately 10 microwatts. 10 microwatts of power is a reasonable output to attain the necessary range with a reasonable signal to noise ratio. To have a feel for this power, we can calculate the temperature rise of a gram of water after it has been exposed to this power source for one hour. By definition: 1 watt = 1 joule/second; 1 joule = 0.239 calorie; and a calorie is the amount of heat required to raise the temperature of one gram of water by one degree Celsius at atmospheric pressure. Therefore the temperature rise, t, in degree Celsius, of a gram of water exposed to a power source of 10 microwatt for one hour, an be calculated by:

$$t = 10 * 0.000001 * 0.239 * 3600 = 0.0086$$

One can see that this is almost negligible. For human tissue, one can expect the same effect because it is more than 90% composed of water. Further more, the radiation of the transmitter is dispersed in a wide angle probably more than 60 degree (with a micro strip antenna), therefore the radiated energy directed towards the head is much less than 10 microwatt. With this reasoning, one can conclude that this energy level is totally safe for the user. As a matter of interest, one watt of power will induce a temperature rise of 860 degrees. This is the magnitude of power of GSM phone. With a narrow beam antenna, one will expect some malignant effect.

Preferably, the communication between the base unit and head set may be in a frequency channel or channels lying in the range 2200 to 2600MHz, or more preferably in the range 2400 - 2500MHz. The choice of these frequency bands is based on the following factors:

1) Unlicensed operated world wide - these are the only frequency bands with world wide acceptance without needing an operation license.

2) Wide bandwidth available - considering the density of the cellular phone users a very wide bandwidth must be available for expected heavy usage, thus these are the most appropriate bands.

3) Size - as described these frequency bands allow very small RF antenna and filter sizes as opposed to other available unlicensed bands in much lower frequency ranges (below 900 MHz).

4) High radiation efficiency - considering the very small size of the printed circuit board, the radiation ground plane is very small. At lower frequency, one would expect the addition of amplifiers in transmission and reception circuits to be necessary because of lower radiation efficiency, which certainly would increase power consumption.

## Claims

1. Communication apparatus for providing a wire-less two-way audio link between a person and apparatus having an audio output (110) and an audio input (102), the communication apparatus comprising:

   a base unit (100); and
   a head-set (200),
   the base unit (100) comprising an input for receiving an audio signal (112) from the audio output, an encoder (120) for encoding a first carrier signal (122) with the received audio signal, and a transmitter (180) for transmitting the audio-encoded carrier signal (132) to the head-set,
   the head-set (200) being adapted to be worn on the person's head and comprising a receiver (180) for receiving the audio encoded carrier signal from the base unit, a decoder (160) for decoding the received signal, a speaker (202) for outputting the decoded signal to the person, a microphone (210) for detecting the person's voice and generating a voice signal (212), an encoder (120) for encoding a second carrier signal with the voice signal, and a transmitter (180) for transmitting the voice-encoded carrier signal to the base unit,
   the base unit (100) further comprising a receiver (180) for receiving the voice-encoded carrier signal, a decoder (160) for decoding the received signal, and an output (212) for outputting the decoded signal to said audio input (102),
   the base unit and head-set each further comprising a respective controller (190) connected to the respective encoder, transmitter, receiver and decoder, **characterised in that**:

   the frequencies of said first and second carrier signals lie in a common frequency channel,
   at least one of the controllers is arranged to send a synchronization signal to the other controller,
   the controllers are arranged to synchronize operation of the transmitters and receivers such that the audio-encoded and voice-encoded carrier signals are transmitted in alternate time intervals, to provide time division duplex communication between the base unit and head-set on said frequency channel, and the base unit controller (190) is further arranged to monitor the intensity of the received audio signal (232) and the intensity of the decoded signal (212) output to the audio input, and to terminate transmission of the audio-encoded carrier signal (132) to the head-set (200) in response to both intensities remaining below respective predetermined thresholds for a predetermined time interval.

2. Communication apparatus in accordance with Claim 1, wherein the controllers (190) are arranged to exchange synchronization hand shake signals (SHS) at predetermined time intervals while both of the intensities remain below their respective thresholds, the SHS signals being modulated signals transmitted on a predetermined command channel in alternate time intervals in time division duplex fashion, the base unit and head-set being arranged to switch to respective low-power-consumption modes between the SHS signals.

3. Communication apparatus in accordance with Claim 2 wherein, in response to the intensity of the received audio signal (232) exceeding the predetermined threshold, the base unit controller (190) is arranged to search for an empty communication channel by controlling the receiver and decoder and monitoring the received signal intensities at different frequencies, and after finding an empty communication channel is arranged to send a SHS signal containing information regarding the empty channel to the head-set (200), the base unit (100) and head-set (200) being arranged to then commence transmitting the audio encoded and voice encoded carrier signals on the empty channel in the time division duplex fashion.

4. Communication apparatus in accordance with any preceding claim, wherein each encoder (120) is arranged to digitally encode the respective carrier signal with the received audio signal or voice signal.

5. Communication apparatus in accordance with any preceding claim wherein the encoder (120) of the base unit (100) comprises a first frequency synthesizer (900) and the decoder (160) of the base unit comprises the same first frequency synthesizer, the frequency generated by the synthesizer being controlled by the controller (190) according to whether the base unit is transmitting or receiving,

the encoder and decoder of the head-set similarly sharing a second frequency synthesizer (900) controlled by the head-set controller.

6. Communication apparatus in accordance with claim 5 wherein the first and second frequency synthesizers (900) each comprise a respective reference oscillator (940), phase detector (930), frequency divider (930), integrator (920), low-pass filter (920) and voltage controlled oscillator (VCO) (910) arranged as a phase lock loop, the frequency divider being controlled by the controller (190) to set the output frequency of the VCO, the VCO further comprising a modulation input (902).

7. Communication apparatus in accordance with any preceding claim, wherein

the base unit (100) comprises, a converter (121) for converting the audio signal to a digital audio data stream, the base unit encoder comprises a data packet encoder (126) for receiving the audio data stream and forming discrete audio data packets, and the base unit transmitter is arranged to transmit the audio data packets to the head-set using the first carrier signal,

the head-set receiver is arranged to receive the transmitted audio data packets, the head-set decoder includes a signal reconstructor (160) for reconstructing the audio signal from the received audio data packets, and the speaker is arranged to output the reconstructed audio signal to the person, the head-set encoder comprises:

a converter (121) for converting the voice signal to a digital voice data stream; and a data packet encoder (126) for receiving the voice data stream and forming discrete voice data packets, the head-set transmitter being arranged to transmit the voice data packets to the base unit using the second carrier signal,

the base unit receiver is arranged to receive the transmitted voice data packets, the base unit decoder comprises a signal reconstructor (160) for reconstructing the voice signal from the received voice data packets, and said base unit output is arranged to output the reconstructed voice signal to the apparatus audio input,

the base unit and head-set controllers being connected to the respective converter, data packet encoder, transmitter, receiver, and signal reconstructor, at least one of the controllers being arranged to send a synchronisation signal to the other controller,

the controllers being arranged to synchronise operation of the transmitters and receivers such that the audio data packets and voice data packets are transmitted alternately to provide time division duplex communication between the base unit and head-set on said frequency channel.

8. Communication apparatus in accordance with any preceding claim, wherein said first and second carrier signals are radio frequency signals.

9. Communication apparatus in accordance with any preceding claim wherein said common frequency channel lies in the range 2200 to 2600MHz.

10. Communication apparatus in accordance with any preceding claim, wherein said first and second carrier signals each have a frequency of 2400MHz.

11. Communication apparatus in accordance with any preceding claim, wherein the base unit (100) and head set (200) each comprise a respective transceiver which provides said transmitter and receiver, the transceiver being switchable between a transmitter mode and a receiver mode in response to a control signal from the respective controller.

12. Communication apparatus in accordance with any preceding claim wherein the head-set (200) is arranged such that the maximum power radiated from it does not exceed 10 micro watts.

13. Communication apparatus in accordance with any preceding claim, wherein said apparatus having an audio output and an audio input is a mobile telephone, and the base unit is adapted to interface with the mobile telephone.

14. A method of providing a two way audio link between a person and apparatus having an audio output and an audio input, the method comprising the steps of: receiving at a base unit an audio signal (112) from the audio output;

generating a first carrier signal (122);

encoding the first carrier signal with the audio signal;

transmitting the audio-encoded first carrier signal (132) from the base unit to a head-set worn on the person's head;

decoding the received audio-encoded signal in the head-set;

outputting the decoded signal (112) to the person via a speaker;

generating a voice signal (212) indicative of the person's vocal output using a microphone;

generating a second carrier signal (222) in the head-set;

encoding the second carrier signal with the voice signal;

transmitting the voice-encoded second carrier signal (232) from the head set to the base unit;

decoding the received voice-encoded signal in the base unit, and

outputting the decoded signal (212) to said audio input,

**characterised in that** the first and second carrier signals are in a common, first frequency range and

the method further comprises the steps of transmitting a synchronisation signal from at least one of the base unit and head-set to the other;

synchronizing said transmitting steps such that the audio and voice encoded signals are transmitted in alternate time intervals to provide time division duplex communication between the base unit and head-set in said first frequency range;

monitoring the intensity of said received audio signal and the intensity of the signal output to the apparatus audio input; and

terminating transmission of the audio-encoded first carrier signal or the audio data packets respectively, in response to both intensities remaining below respective predetermined thresholds for a predetermined time interval.

15. A method in accordance with claim 14, further comprising the steps of:

exchanging between the base unit and head-set synchronization hand-shake signals at predetermined time intervals while both said intensities remain below their respective thresholds, the SHS signals being modulated signals transmitted on a predetermined command channel in alternate time intervals in Time Division Duplex fashion; and

switching the base unit and head-set to respective low-power-consumption modes between said SHS signals.

16. A method in accordance with claim 15, further comprising the steps of:

searching for an empty communication channel in response to the received audio signal exceeding its predetermined threshold;

sending an SHS signal to the head-set from the base unit after finding an empty channel, the SHS signal containing information identifying the empty channel;

setting said first and second carrier frequencies to lie in said empty channel; and

commencing or recommencing transmission of said audio and voice encoded signals or said audio and voice data packets respectively in time division duplex fashion on said empty channel.

17. A method in accordance with any one of Claims 14 to 16,

wherein the step of encoding the first carrier signal comprises

converting the audio signal to a digital audio data stream and

forming the audio data stream into discrete audio data packets, the step of transmitting the audio-encoded first carrier signal comprises

transmitting the audio data packets to the head-set using the first carrier signal, the step of decoding the received audio-encoded signal comprises reconstructing the audio signal at the head-set from the received audio data packets, the step of outputting the decoded signal comprises outputting the reconstructed audio signal to the person via a speaker, the step of generating a voice signal comprises detecting the person's vocal output using a head-set microphone, the step of encoding the second carrier signal comprises

converting the microphone signal to a digital voice data stream and

forming the voice data stream into discrete voice data packets, and the step of transmitting the voice-encoded second carrier signal comprises

transmitting the voice data packets to the base unit using the second carrier signal,

the step of decoding the received voice-encoded signal comprises

reconstructing the microphone signal at the base unit from the received voice data packets; and the step of outputting the decoded signal comprises outputting the reconstructed microphone signal to the apparatus audio input,

the synchronizing step comprising the steps of:

transmitting a synchronisation signal from at least one of the base unit and head-set to the other;

receiving the synchronisation signal at the base unit or head-set respectively; and

synchronising said transmitting steps such that the audio data packets and voice data packets are transmitted alternately to provide time division duplex communication between the base unit and head-set on said frequency channel.

**Patentansprüche**

1. Kommunikationsvorrichtung zur Bereitstellung einer drahtlosen Gegensprechverbindung zwischen einer Person und einer Vorrichtung mit einem Tonausgang (110) und einem Toneingang (102), wobei die Kommunikationsvorrichtung umfasst:

- eine Basiseinheit (100); und
- ein Headset (200),

wobei die Basiseinheit (100) einen Eingang umfasst zum Empfang eines Tonsignals (112) von dem Tonausgang, einen Kodierer (120) zum Kodieren eines ersten Trägersignals (122) mit dem empfangenen Tonsignal sowie einen Sender (180) zum Übertragen des tonkodierten Trägersignals (132) an das Headset,
wobei das Headset (200) dafür ausgelegt ist, auf dem Kopf der Person getragen zu werden und einen Empfänger (180) zum Empfang des tonkodierten Trägersignals von der Basiseinheit umfasst, einen Dekodierer (160) zum Dekodieren des empfangenen Signals, einen Lautsprecher (202) zur Ausgabe des dekodierten Signals an die Person, ein Mikrophon (210) zur Erfassung der Stimme der Person und Erzeugung eines Sprachsignals (212), einen Kodierer (120) zum Kodieren eines zweiten Trägersignals mit dem Sprachsignal, und einen Sender (180) zur Übertragung des sprachkodierten Trägersignals an die Basiseinheit,
wobei die Basiseinheit (100) ferner einem Empfänger (180) umfasst zum Empfang des sprachkodierten Trägersignals, einen Dekodierer (160) zum Dekodieren des empfangenen Signals und einen Ausgang (212) zur Ausgabe des dekodierten Signals an den Tonausgang (102),
wobei sowohl die Basiseinheit als auch das Headset ferner einen jeweiligen Kontroller (190) umfasst, der mit dem jeweiligen Kodierer, Sender, Empfänger und Dekodierer verbunden ist, **dadurch gekennzeichnet, dass**:

die Frequenzen des ersten und des zweiten Trägersignals in einem gemeinsamen Frequenzkanal liegen,
wenigstens einer der Kontroller ausgebildet ist, ein Synchronisationssignal zu dem anderen Kontroller zu senden,

wobei die Kontroller ausgebildet sind, den Betrieb der Sender und Empfänger zu synchronisieren, derart dass die tonkodierten und die sprachkodierten Trägersignale in abwechselnden Zeitintervallen übertragen werden, um eine Zeit-Duplex-Kommunikation zwischen der Basiseinheit und dem Headset in dem Frequenzkanal bereitzustellen, und wobei der Basiseinheitskontroller (190) ferner ausgebildet ist, die Intensität des empfangenen Tonsignals (232) und die Intensität des an den Toneingang ausgegebenen dekodierten Signals (212) zu überwachen und die Übertragung des tonkodierten Trägersignals (132) an das Headset (200) in Antwort darauf zu beenden, dass beide Intensitäten für ein vorbestimmtes Zeitintervall unterhalb jeweiliger vorbestimmter Schwellenwerte bleiben.

2. Kommunikationsvorrichtung nach Anspruch 1, wobei die Kontroller (190) ausgebildet sind, in vorbestimmten Zeitintervallen Synchronisations-Handshakesignale (SHS) auszutauschen, während beide Intensitäten unterhalb ihrer jeweiligen Schwellenwerte bleiben, wobei die SHS-Signale modulierte Signale sind, die in einem vorbestimmten Befehlskanal in abwechselnden Zeitintervallen in einer Zeit-Duplex-Weise übertragen werden, wobei die Basiseinheit und das Headset ausgebildet sind, zwischen den SHS-Signalen zu jeweiligen Geringstromverbrauchsmodi umzuschalten.

3. Kommunikationsvorrichtung nach Anspruch 2, wobei in Antwort auf die Intensität des empfangenen Tonsignals (232), das den vorbestimmten Schwellenwert überschreitet, der Basiseinheitskontroller (190) ausgebildet ist, nach einem leeren Kommunikationskanal zu suchen, indem er den Empfänger und den Dekoder steuert/regelt und die empfangenen Signalintensitäten bei unterschiedlichen Frequenzen überwacht, und nach dem Finden eines leeren Kommunikationskanals ausgebildet ist, ein SHS-Signal an das Headset (200) zu senden, das Information betreffend den leeren Kanal enthält, wobei die Basiseinheit (100) und das Headset (200) ausgebildet sind, dann die Übertragung der tonkodierten und der sprachkodierten Trägersignale in dem leeren Kanal in einer Zeit-Duplex-Weise zu beginnen.

4. Kommunikationsvorrichtung nach einem der vorangehenden Ansprüche, wobei jeder Kodierer (120) ausgebildet ist, das jeweilige Trägersignal mit dem empfangenen Tonsignal oder Sprachsignal digital zu kodieren.

5. Kommunikationsvorrichtung nach einem der vorangehenden Ansprüche, wobei der Kodierer (120) der Basiseinheit (100) einen ersten Frequenzsynthesizer (900) umfasst und der Dekodierer (160) der Basiseinheit denselben ersten Frequenzsynthesizer umfasst, wobei die durch den Synthesizer erzeugte Frequenz durch den Kontroller (190) gesteuert/geregelt wird nach Maßgabe, ob die Basiseinheit überträgt oder empfängt. wobei der Kodierer und der Dekodierer des Headsets in ähnlicher Weise einen zweiten gemeinsamen Frequenzsynthesizer (900) besitzen, der durch den Kontroller des Headsets gesteuert/geregelt wird.

6. Kommunikationsvorrichtung nach Anspruch 5, wobei sowohl der erste als auch der zweite Frequenzsynthesizer (900) einen jeweiligen Referenzoszillator (940), Phasendetektor (930), Frequenzteiler (930), Integrator (920), Tiefpassfilter (920) und Spannungsgesteuerten/geregelten Oszillator (VCO) (910) umfasst, die als Phasenregelkreis angeordnet sind, wobei der Frequenzteiler durch den Kontroller (190) derart gesteuert/geregelt wird, dass er die Ausgangsfrequenz des VCO einstellt, wobei der VCO ferner einen Modulationseingang (902) umfasst.

7. Kommunikationsvorrichtung nach einem der vorangehenden Ansprüche, wobei
die Basiseinheit (100) einen Wandler (121) zum Umwandeln des Tonsignals in einen digitalen Ton-Datenstrom umfasst, wobei der Basiseinheitskodierer einen Datenpaketkodierer (126) zum Empfang des Ton-Datenstroms und Bilden diskreter Ton-Datenpakete umfasst und wobei der Basiseinheitssender ausgebildet ist, die Ton-Datenpakete an das Headset unter Verwendung des ersten Trägersignals zu übertragen,
wobei der Headset-Empfänger ausgebildet ist, die übertragenen Ton-Datenpakete zu empfangen, wobei der Headset-Dekoder einen Signal-Rekonstruktor (160) zum Rekonstruieren des Tonsignals aus den empfangenen Ton-Datenpaketen enthält und wobei der Lautsprecher ausgebildet ist, das rekonstruierte Tonsignal an die Person auszugeben, wobei der Headset-Kodierer umfasst:

einen Wandler (121) zum Umwandeln des Sprachsignals in einen digitalen Sprach-Datenstrom und einen Datenpaketkodierer (126) zum Empfang des Sprach-Datenstroms und Bilden diskreter Sprach-Datenpakete, wobei der Headset-Sender ausgebildet ist, die Sprach-Datenpakete an die Basiseinheit unter Verwendung des zweiten Trägersignals zu übertragen,

wobei der Basiseinheitsempfänger ausgebildet ist, die übertragenen Sprach-Datenpakete zu empfangen, wobei der Basiseinheitsdekoder einen Signal-Rekonstruktor (160) zum Rekonstruieren des Sprachsignals aus den empfangenen Sprach-Datenpaketen umfasst und wobei der Basiseinheitsausgang ausgebildet ist, das rekonstruierte Sprachsignal an den Toneingang der Vorrichtung auszugeben,
wobei die Kontroller der Basiseinheit und des Headsets mit dem jeweiligen Wandler, Datenpaketkodierer, Sender, Empfänger und Signal-Rekonstruktor verbunden sind, wobei wenigstens einer der Kontroller ausgebildet ist, ein Synchronisationssignal zu dem anderen Kontroller zu übertragen,
wobei die Kontroller ausgebildet sind, den Betrieb der Sender und Empfänger derart zu synchronisieren, dass die Ton-Datenpakete und die Sprach-Datenpakete abwechselnd übertragen werden, um eine Zeit-Duplex-Kommunikation zwischen der Basiseinheit und dem Headset in dem Frequenzkanal zu ermöglichen.

8. Kommunikationsvorrichtung nach einem der vorangehenden Ansprüche, wobei das erste und das zweite Trägersignal Radiofrequenzsignale sind.

9. Kommunikationsvorrichtung nach einem der vorangehenden Ansprüche, wobei der gemeinsame Frequenzkanal in dem Bereich von 2200 MHz bis 2600 MHz liegt.

10. Kommunikationsvorrichtung nach einem der vorangehenden Ansprüche, wobei sowohl das erste als auch das zweite Trägersignal eine Frequenz von 2400 MHz aufweist.

11. Kommunikationsvorrichtung nach einem der vorangehenden Ansprüche, wobei die Basiseinheit (100) und das Headset (200) jeweils einen jeweiligen Transceiver umfassen, der den Sender und den Empfänger bereitstellt, wobei der Transceiver zwischen einem Sendermodus und einem Empfängermodus in Antwort auf ein Steuer/Regelsignal von dem jeweiligen Kontroller umschaltbar ist.

12. Kommunikationsvorrichtung nach einem der vorangehenden Ansprüche, wobei das Headset (200) derart ausgebildet ist, dass die maximale von demselben abgestrahlte Leistung 10 Mikrowatt nicht überschreitet.

13. Kommunikationsvorrichtung nach einem der vorangehenden Ansprüche, wobei die Vorrichtung, die einen Tonausgang und einen Toneingang aufweist, ein Mobiltelefon ist und die Basiseinheit dafür ausgebildet ist, an das Mobiltelefon angeschlossen zu werden.

14. Verfahren zur Bereitstellung einer Gegensprechverbindung zwischen einer Person und einer Vorrichtung mit einem Tonausgang und einem Toneingang, wobei das Verfahren die Schritte umfasst:
Empfangen eines Tonsignals (112) von dem Tonausgang an einer Basiseinheit;

- Erzeugen eines ersten Trägersignals (122);
- Kodieren des ersten Trägersignals mit dem Tonsignal;
- Übertragen des tonkodierten ersten Trägersignals (132) von der Basiseinheit zu einem Headset, das auf dem Kopf einer Person getragen wird;
- Dekodieren des empfangenen tonkodierten Signals in dem Headset;
- Ausgeben des dekodierten Signals (112) an die Person über einen Lautsprecher;
- Erzeugen eines Sprachsignals (212), das die Sprachausgabe der Person erkennen lässt, unter Verwendung eines Mikrofons;
- Erzeugen eines zweiten Trägersignals (222) in dem Headset;
- Kodieren des zweiten Trägersignals mit dem Sprachsignal;
- Übertragen des sprachkodierten zweiten Trägersignals (232) von dem Headset zu der Basiseinheit;
- Dekodieren des empfangenen sprachkodierten Signals in der Basiseinheit; und
- Ausgeben des dekodierten Signals (212) an den Toneingang;

**dadurch gekennzeichnet, dass** das erste das und zweite Trägersignal in einem gemeinsamen, ersten Frequenzbereich liegen und dass das Verfahren ferner die Schritte umfasst

- Übertragen eines Synchronisationssignals von wenigstens einer Einheit aus Basiseinheit und Headset zu der anderen
- Synchronisieren der Sendeschritte derart, dass die tonkodierten und sprachkodierten Signale in abwechselnden Zeitintervallen übertragen werden, um eine Zeit-Duplex-Kommunikation zwischen der Basiseinheit und dem Headset in dem ersten Frequenzbereich bereitzustellen;
- Überwachen der Intensität des empfangenen Tonsignals und der Intensität des an den Toneingang der Vorrichtung ausgegebenen Signals; und
- Beenden des Übertragens jeweils des tonkodierten ersten Trägersignals oder der Ton-Datenpakete in Antwort auf beide Intensitäten, die für ein vorbestimmtes Zeitintervall unter den jeweiligen Schwellenwerten bleiben.

15. Verfahren nach Anspruch 14, ferner umfassend die Schritte:

Austauschen von Handshake-Signalen zwischen der Basiseinheit und dem Headset in vorbestimmten Zeitintervallen, während beide Intensitäten unter ihren jeweiligen Schwellenwerten bleiben, wobei die SHS-Signale modulierte Signale sind, die in einem vorbestimmten Befehlskanal in abwechselnden Zeitintervallen in einer Zeit-Duplex-Weise übertragen werden; und
Umschalten der Basiseinheit und des Headsets in jeweilige Geringstromverbrauchsmodi zwischen den SHS-Signalen.

16. Verfahren nach Anspruch 15, ferner umfassend die Schritte:

Suchen nach einem leeren Kommunikationskanal in Antwort auf das empfangene Tonsignal, das seinen vorbestimmten Schwellenwert überschreitet;
Senden eines SHS-Signals an das Headset von der Basiseinheit nach dem Finden eines leeren Kanals, wobei das SHS-Signal Information enthält, die den leeren Kanal identifiziert;
Einstellen der ersten und der zweiten Trägerfrequenz, um in dem leeren Kanal zu liegen; und
Beginnen oder Wiederaufnehmen der Übertragung jeweils der tonkodierten und sprachkodierten Signale oder der Ton- und Sprach-Datenpakete in einer Zeit-Duplex-Weise in dem leeren Kanal.

17. Verfahren nach einem der Ansprüche 14 bis 16, wobei der Schritt des Kodierens des ersten Trägersignals umfasst
Umwandeln des Tonsignals in einen digitalen Ton-Datenstrom und
Ausbilden des Ton-Datenstroms als diskrete Ton-Datenpakete, wobei der Schritt des Übertragens des tonkodierten ersten Trägersignals umfasst
Übertragen der Ton-Datenpakete zu dem Headset unter Verwendung des ersten Trägersignals, wobei der Schritt des Dekodierens des empfangenen tonkodierten Signals umfasst
Rekonstruieren des Tonsignals an dem Headset aus den empfangenen Ton-Datenpaketen, wobei der Schritt des Ausgebens des dekodierten Signals das Ausgeben des rekonstruierten Tonsignals an die Person über einen Lautsprecher umfasst, wobei der Schritt des Erzeugens eines Sprachsignals das Erfassen der Stimmausgabe der Person unter Verwendung eines Headset-Mikrofons umfasst, wobei der Schritt des Kodierens des zweiten Trägersignals umfasst
Umwandeln des Mikrofonsignals in einen digitalen Sprach-Datenstrom und
Ausbilden des Sprach-Datenstroms als diskrete Sprach-Datenpakete und wobei der Schritt des Übertragens des sprachkodierten zweiten Trägersignals umfasst
Übertragen der Sprach-Datenpakete zu der Basiseinheit unter Verwendung des zweiten Trägersignals,
wobei der Schritt des Dekodierens des empfangenen sprachkodierten Signals umfasst
Rekonstruieren des Mikrofonsignals an der Basiseinheit aus den empfangenen Sprach-Datenpaketen, und der Schritt des Ausgebens des dekodierten Signals das Ausgeben des rekonstruierten Mikrofonsignals an den Toneingang der Vorrichtung umfasst,
wobei der Synchronisierungsschritt die Schritte umfasst:

Übertragen eines Synchronisationssignals von wenigstens einer Einheit aus Basiseinheit und Headset zu der anderen, Empfangen des Synchronisationssignals jeweils an der Basiseinheit oder dem Headset; und Synchronisieren der Übertragungsschritte derart, dass die Ton-Datenpakete und die Sprach-Datenpakete abwechselnd übertragen werden, um eine Zeit-Duplex-Kommunikation zwischen der Basiseinheit und dem Headset in dem Frequenzkanal bereitzustellen.

## Revendications

1. Appareil de communication pour établir une liaison audio bi-directionnelle sans fil entre une personne et un appareil ayant une sortie audio (110) et une entrée audio (102), l'appareil de communication comportant :

une unité de base (100) ; et un casque (200), l'unité de base (100) comportant une entrée destinée à recevoir un signal audio (112) provenant de la sortie audio, un codeur (120) destiné à coder un premier signal porteur (122) avec le signal audio reçu, et un émetteur (180) destiné à transmettre le signal porteur (132) à codage audio au casque, le casque (200) étant conçu pour être porté sur la tête d'une personne et comportant un récepteur (180) destiné à recevoir le signal porteur à codage audio provenant de l'unité de base, un décodeur (160) destiné à décoder le signal reçu, un haut-parleur (202) destiné à délivrer en sortie à la personne le signal décodé, un microphone (210) destiné à détecter la voix de la personne et à générer un signal vocal (212), un codeur (120) destiné à coder un second signal porteur avec le signal vocal, et un émetteur (180) destiné à transmettre le signal porteur à codage vocal à l'unité de base, l'unité de base (100) comportant en outre un récepteur (190) destiné à recevoir le signal porteur à codage vocal, un décodeur (160) destiné à décoder le signal reçu, et une sortie (212) destinée à délivrer en sortie à ladite entrée audio (102) le signal décodé, l'unité de base et le casque comportant en outre chacun un dispositif de commande respectif (190) connecté au codeur, à l'émetteur, au récepteur et au décodeur respectifs, **caractérisé en ce que** :

les fréquences desdits premier et second signaux porteurs sont situées dans un canal commun de fréquences, au moins l'un des dispositifs de commande est agencé de façon à envoyer un signal de synchronisation à l'autre dispositif de commande, les dispositifs de commande sont agencés de façon à synchroniser le fonctionnement des émetteurs et des récepteurs afin que les signaux porteurs à codage audio et à codage vocal soient transmis dans des intervalles de temps alternés, pour établir une communication en duplex par répartition dans le temps entre l'unité de base et le casque sur ledit canal de fréquence, et le dispositif (190) de commande de l'unité de base est en outre agencé de façon à contrôler l'intensité du signal audio reçu (232) et l'intensité du signal décodé (212) délivrée en sortie à l'entrée audio, et à arrêter la transmission du signal porteur (132) à codage audio au casque (200) en réponse au fait que les deux intensités restent en dessous de seuils prédéterminés respectifs pendant un intervalle de temps prédéterminé.

2. Appareil de communication selon la revendication 1, dans lequel les dispositifs de commande (190) sont agencés de façon à échanger des signaux de mise en liaison de synchronisation SHS à des intervalles de temps prédéterminés tandis que les deux intensités restent en dessous de leurs seuils respectifs, les signaux SHS étant des signaux modulés transmis sur un canal d'ordre prédéterminé dans des intervalles de temps alternés d'une manière en duplex à répartition dans le temps, l'unité de base et le casque étant agencés de façon à commuter les modes respectifs à faible consommation d'énergie entre les signaux SHS.

3. Appareil de communication selon la revendication 2, dans lequel, en réponse au dépassement par l'intensité du signal audio reçu (232) du seuil prédéterminé, le dispositif de commande (190) de l'unité de base est agencé de façon à rechercher un canal de communication vide en commandant le récepteur et le décodeur et en contrôlant les intensités des signaux reçus à des fréquences différentes et, après avoir trouvé un canal de communication vide, est agencé de façon à envoyer un signal SHS contenant une information concernant le canal vide au casque (200), l'unité de base (100) et le casque (200) étant agencés pour commencer alors une transmission des signaux porteurs à codage audio et à codage vocal sur le canal vide dans le mode en duplex à répartition dans le temps.

4. Appareil de communication selon l'une quelconque des revendications précédentes, dans lequel chaque codeur (120) est agencé de façon à coder numériquement le signal porteur respectif avec le signal audio ou le signal vocal reçu.

5. Appareil de communication selon l'une quelconque des revendications précédentes, dans lequel le codeur (120) de l'unité de base (100) comporte un premier synthétiseur de fréquence (900) et le décodeur (160) de l'unité de base comporte le même premier synthétiseur de fréquence, la fréquence générée par le synthétiseur étant commandée par le dispositif de commande (190) selon que l'unité de base est en émission ou en réception,

les codeur et le décodeur du casque se partageant similairement un second synthétiseur de fréquence (900) commandé par le dispositif de commande du casque.

6. Appareil de communication selon la revendication 5, dans lequel les premier et second synthétiseurs de fréquence (900) comportent chacun un oscillateur de référence (940), un détecteur de phase (930), un diviseur de fréquence (930), un intégrateur (920), un filtre passe-bas (920), et un oscillateur commandé en tension VCO (910), respectifs, agencés sous la forme d'une boucle à phase asservie, le diviseur de fréquence étant commandé par le dispositif de commande (190) pour établir la fréquence de sortie de l'oscillateur VCO, l'oscillateur VCO comportant en outre une entrée de modulation (902).

7. Appareil de communication selon l'une quelconque des revendications précédentes, dans lequel

l'unité de base (100) comporte un convertisseur (121) destiné à convertir le signal audio en un train de données audio numériques, le codeur de l'unité de base comporte un codeur (126) de paquets de données destiné à recevoir le train de données audio et à former des paquets de données audio discrets, et l'émetteur de l'unité de base est agencé de façon à transmettre les paquets de données audio au casque en utilisant le premier signal porteur,

le récepteur du casque est agencé de façon à recevoir les paquets de données audio transmis, le décodeur du casque comprend un reconstructeur (160) de signal destiné à reconstruire le signal audio à partir des paquets de données audio reçus, et le haut-parleur est agencé de façon à délivrer en sortie à la personne le signal audio reconstruit, le codeur du casque comporte :

un convertisseur (121) destiné à convertir le signal vocal en un train de données vocales numériques ; et un codeur (126) de paquets de données destiné à recevoir le train de données vocales et à former des paquets de données vocales discrets, l'émetteur du casque étant agencé de façon à transmettre les paquets de données vocales à l'unité de base en utilisant le second signal porteur,

le récepteur de l'unité de base est agencé de façon à recevoir les paquets de données vocales transmis, le décodeur de l'unité de base comporte un reconstructeur (160) de signal destiné à reconstruire le signal vocal à partir des paquets de données vocales reçus, et ladite sortie de l'unité de base est agencée de façon à délivrer le signal vocal reconstruit à l'entrée audic de l'appareil.

les dispositifs de commande de l'unité de base et du casque étant connectés au convertisseur, au codeur de paquets de données, à l'émetteur, au récepteur et au reconstructeur de signal respectifs, au moins l'un des dispositifs de commande étant agencé de façon à envoyer un signal de synchronisation à l'autre dispositif de commande,

les dispositifs de commande étant agencés de façon à synchroniser le fonctionnement des émetteurs et des récepteurs de façon que les paquets de données audio et les paquets de données vocales soient transmis en alternance pour établir une communication en duplex à répartition dans le temps entre l'unité de base et le casque sur ledit canal de fréquence.

8. Appareil de communication selon l'une quelconque des revendications précédentes, dans lequel lesdits premier et second signaux porteurs sont des signaux à fréquence radiaux.

9. Appareil de communication selon l'une quelconque des revendications précédentes, dans lequel ledit canal commun de fréquence est compris dans la gamme de 2200 à 2600 MHz.

10. Appareil de communication selon l'une quelconque des revendications précédentes, dans lequel lesdits premier et second signaux porteurs ont chacun une fréquence de 2400 MHz.

11. Appareil de communication selon l'une quelconque des revendications précédentes, dans lequel l'unité de base (100) et le casque (200) comprennent chacun un émetteur-récepteur respectif qui procure ledit émetteur et ledit récepteur, l'émetteur-récepteur pouvant être commuté entre un mode émetteur et un mode récepteur en réponse à un signal de commande provenant du dispositif de commande respectif.

12. Appareil de communication selon l'une quelconque des revendications précédentes, dans lequel le casque (200) est agencé de façon que la puissance maximale qu'il rayonne ne dépasse pas 10 microwatts.

13. Appareil de communication selon l'une quelconque des revendications précédentes, dans lequel ledit appareil ayant une sortie audio et une entrée audio est un téléphone mobile, et l'unité de base est conçue pour être en interface avec le téléphone mobile.

14. Procédé pour établir une liaison audio bi-directionnelle entre une personne et un appareil ayant une sortie audio et une entrée audio, le procédé comprenant les étapes qui consistent : à recevoir à une unité de base un signal audio (112) provenant de la sortie audio ;

à générer un premier signal porteur (122) ;

à coder le premier signal porteur avec le signal audio ;

à transmettre le premier signal porteur (132) à code audio de l'unité de base au casque porté sur la tête d'une personne ;

à décoder le signal à codage audio, reçu, dans le casque ;

à délivrer en sortie le signal décodé (112) à la personne par l'intermédiaire d'un haut-parleur ;

à générer un signal vocal (212) représentatif de la voix émise par la personne en utilisant un microphone ;

à générer un second signal porteur (222) dans le casque ;

à coder le second signal porteur avec le signal vocal ;

à transmettre le second signal porteur (232) à codage vocal du casque à l'unité de base ;

à décoder le signal à codage vocal reçu dans l'unité de base,

à délivrer en sortie le signal décodé (212) à ladite entrée audio,

**caractérisé en ce que** les premier et second signaux porteurs sont dans une première gamme commune de fréquences, et

le procédé comprend en outre les étapes qui consistent à transmettre un signal de synchronisation d'au moins l'un de l'unité de base et du casque à l'autre ;

à synchroniser lesdites étapes de transmission de façon que les signaux à codage audio et à codage vocal soient transmis dans des intervalles de temps alternés pour établir une communication en duplex à répartition dans le temps entre l'unité de base et le casque dans ladite première gamme de fréquence ;

à contrôler l'intensité dudit signal audio reçu et l'intensité du signal de sortie à l'entrée audio de l'appareil ;

à arrêter la transmission du premier signal porteur à codage audio ou des paquets de données audio, respectivement, en réponse au fait que les deux intensités restent en dessous de celles prédéterminées respectif pendant un intervalle de temps prédéterminé.

15. Procédé selon la revendication 14, comprenant en outre les étapes qui consistent :

à échanger entre l'unité de base et le casque des signaux de mise en liaison de synchronisation à des intervalles de temps prédéterminés tandis que lesdites deux intensités restent en dessous de leurs seuils respectifs, les signaux SHS étant des signaux modulés transmis sur un canal d'ordre prédéterminé dans des intervalles de temps alternés dans un mode en Duplex à Répartition dans le Temps ;

à commuter l'unité de base et le casque sur des modes respectifs à faible consommation d'énergie entre lesdits signaux SHS.

16. Procédé selon la revendication 15, comprenant en outre les étapes qui consistent :

à rechercher un canal de communication vide en réponse au dépassement par le signal audio reçu de son seuil prédéterminé ;

à envoyer un signal SHS au casque depuis l'unité de base après avoir trouvé un canal vide, le signal SHS contenant une information identifiant le canal vide ;

à établir lesdites première et seconde fréquences porteuses afin qu'elles soient comprises dans ledit canal vide ; et

à commencer ou recommencer une transmission desdits signaux à codage audio et à codage vocal ou desdits paquets de données audio et vocales, respectivement, en mode en duplex à répartition dans le temps sur ledit canal vide.

17. Procédé selon les revendications 14 à 16,

dans lequel l'étape de codage du premier signal porteur comprend

la conversion du signal audio en un train de données audio numériques

la formation du train de données audio en paquets de données audio discrets, l'étape de transmission du premier signal porteur à codage audio comprend

la transmission des paquets de données audio au casque en utilisant le premier signal porteur, l'étape de décodage du signal à codage audio reçu comprend la reconstruction du signal audio au casque à partir des paquets de données audio reçus, l'étape de sortie du signal décodé comprend la sortie du signal audio reconstruit vers la personne par l'intermédiaire d'un haut-parleur, l'étape de génération d'un signal vocal comprend la détection de la voix de la personne délivrée en sortie en utilisant un microphone du casque, l'étape de codage du second signal porteur comprend

la conversion du signal du microphone en un train de données vocales numériques

la formation du train de données vocal en paquets de données vocales discrets, et l'étape de transmission du second signal porteur à codage vocal comprend

la transmission des paquets de données vocales à l'unité de base en utilisant le second signal porteur,

l'étape de décodage du signal à codage vocal reçu comprend

la reconstruction du signal du microphone à l'unité de base à partir des paquets de données vocales reçus ; et l'étape de sortie du signal décodé comprend la sortie du signal de microphone reconstruit vers l'entrée audio de l'appareil,

l'étape de synchronisation comprenant les étapes qui consistent :

à transmettre un signal de synchronisation depuis au moins l'un de l'unité de base et du casque à l'autre ;

à recevoir le signal de synchronisation à l'unité de base ou au casque, respectivement ; et

à synchroniser lesdites étapes de transmission de façon que les paquets de données audio et les paquets de données vocales soient transmis en alternance pour établir une communication en duplex à répartition dans le temps entre l'unité de base et le casque sur ledit canal de fréquence.

Fig. 1

Fig. 2

Fig. 3

Fig. 4

EP 1 133 135 B1

Fig. 5

900
PROGRAMMABLE
FREQUENCY
SYNTHESIZER

Fig. 6

EP 1 133 135 B1